# EUROPEAN PATENT SPECIFICATION

(11) **EP 3 348 387 B1**
(45) Date of publication and mention of the grant of the patent: **01.10.2025**
(21) Application number: 18150793.0
(22) Date of filing: 09.01.2018
(51) Int. Cl.: B29C 73/24, B29C 73/02, B64F 5/40

(54) **METHOD AND APPARATUS FOR REPAIRING COMPOSITE MATERIAL USING SOLVATION PROCESS**
VERFAHREN UND VORRICHTUNG ZUR REPARATUR VON VERBUNDMATERIAL MIT EINEM SOLVATIONSPROZESS
MÉTHODE ET APPAREIL DE RÉPARATION DE MATÉRIAU COMPOSITE AU MOYEN D'UN PROCESSUS DE SOLVATATION

(30) Priority: 12.01.2017 KR 20170005589
(43) Date of publication of application: 18.07.2018
(73) Proprietor: Korea Institute of Science and Technology, Seoul 02792 (KR)
(72) Inventor: GOH, Munju, 55324 Jeollabuk-do (KR); KIM, Jun Kyung, 55324 Jeollabuk-do (KR); PARK, Chiyoung, 55324 Jeollabuk-do (KR); YOU, Nam Ho, 55324 Jeollabuk-do (KR); YEO, Hyeonuk, 55324 Jeollabuk-do (KR)
(74) Representative: advotec.

(56) References cited:
- DE-A1- 102013 112 933
- US-A- 3 049 302
- US-A- 3 261 330
- US-A- 4 552 162
- US-A1- 2001 003 353
- US-A1- 2013 276 256
- US-A1- 2015 151 498

## Description

### BACKGROUND OF THE INVENTION

### 1. Field

The present disclosure relates to a method according to claim 1 and an apparatus according to claims 5 and 6 for repairing composite materials such as automobiles, aircraft, etc. using a solvation process.

### 2. Description of the Related Art

Since composite materials such as fiber reinforced plastic (hereinafter this may be abbreviated as "FRP") obtained by mixing a fiber such as a carbon fiber or glass fiber with plastic, particularly carbon fiber reinforced plastic (hereinafter may be abbreviated as CFRP) are lightweight and exhibit excellent physical properties and durability, they are widely used as key materials in the field of automobiles, aerospace planes, or new energy.

Typical matrix polymer resins used for these composite materials are thermosetting resins such as an epoxy resin or a polyurethane resin. However, due to the characteristic of thermosetting resins, composite materials using a thermosetting resin have a drawback that it is difficult to repair them when a part or a large portion thereof is damaged.

Thus, the repair of composite materials such as FRP, etc. could be an important prerequisite for application of FRP in the market of automobiles and aircraft, etc. in the future.

Meanwhile, various methods are currently being carried out to repair damaged composite materials such as FRP, etc. For example, the repair technology of physically removing the damaged portion of aircraft with a laser, a grinder, etc. and filling new FRP is being actively studied at the initiative of aerospace companies such as Aerospatiale Societe Nationale Industrielle, McDonnell Douglas Corporation, The Boeing Company, Airbus Operations GmbH, etc.

However, according to the observation of the present inventors, the technology of repairing FRP using a conventional physical removal method breaks the continuity of the filler (for example, fiber skeleton) in FRP due to the physical removal. Moreover, because the technology does not involve a process for reconnecting the fiber skeleton with disrupted continuity, it has a drawback that the physical properties, etc. of the FRP after repair are noticeably lower than those of the FRP before breakage or damage.
US 2015/151498 A1 discloses an apparatus for repairing composite material comprising a matrix resin and a filler fiber using a solvation process, comprising a depolymerization solution supply device, for providing a depolymerization solution capable of depolymerizing the matrix resin to a portion to be repaired of the composite material.
DE 10 2013 112 933 A1 discloses a method for repairing composite material comprising a matrix resin and a filler fiber.
US 2001/003353 A1 describes an apparatus for repairing composite material using a solvation process, comprising a depolymerization solution storage tank, a depolymerization solution contact device for receiving a depolymerization solution and providing it such that the solution contacts the portion to be repaired of the composite material. This apparatus further comprises a heater for heating the depolymerization solution storage tank and a pump for circulating a depolymerization solution from the depolymerization solution storage tank to the depolymerization solution contact device.
US 3 049 302 A describes an apparatus for repairing composite material using a solvation, comprising a depolymerization solution storage tank, a depolymerization solution contact device for receiving a depolymerization solution from the depolymerization solution storage tank and providing it such that the solution contacts the portion to be repaired of the composite material. This apparatus further comprises a heater for heating the depolymerization solution transfer pipe located between the depolymerization solution storage tank and the depolymerization solution contact device. It further comprises a pump for circulating a depolymerization solution from the depolymerization solution storage tank to the depolymerization solution contact device.

### SUMMARY

An aspect of example embodiments of the present invention is to provide a method and an apparatus for repairing composite materials using a solvation process, in which only a matrix material, that is, a thermosetting resin of a broken or damaged portion in a composite material such as fiber reinforced plastic (FRP) is removed by solvation with a solution so that only the internal filler fiber skeleton remains, thus allowing to secure the continuity between fibers even after the repair, and in which a matrix material is reimpregnated, thus enabling to obtain a strength similar to that of the original composite material even after the repair.

To this end, it is possible to solve the problem that cannot be avoided in the conventional repair technology of physically removing all the broken or damaged portions of a composite material such as fiber reinforced plastic (FRP) by using a grinder, etc. and filling the grooved portion after the removal with new FRP, that is, the problem that the continuity between the filler fiber skeleton of the non-damaged portion and the filler fiber skeleton of the newly filled portion cannot be secured.

Another aspect of example embodiments of the present invention is to provide a method and an apparatus for repairing composite materials using a solvation process, in which a part or all of the thermosetting resin as a matrix material is removed from a composite material such as fiber reinforced plastic (FRP) while leaving only the internal filler fiber skeleton, thus allowing very easy repair.

Yet another aspect of example embodiments of the present invention is to provide a method and an apparatus for repairing composite materials using a solvation process, which enable to minimize damage to internal filler fibers during the repair of composite materials such as fiber reinforced plastic (FRP), etc. and which also do not cause damage such as cracks, etc. to the structure portions other than the portion to be repaired.

In embodiments of the present invention, provided is a method for repairing composite materials comprising a matrix resin and a filler fiber, comprising: providing a solution capable of depolymerizing the matrix resin to a portion to be repaired of the composite material to depolymerize the matrix resin.

The method further comprises re-impregnating the matrix resin into a fiber skeleton structure remaining after the depolymerization of the matrix resin.

In an example embodiment, the method further comprises pretreating the composite material with an acidic material prior to depolymerization.

In an example embodiment, the method further comprises patching and sewing fibers to a part of the fiber skeleton remaining after depolymerization.

In an example embodiment, in the method, the composite material is a fiber reinforced plastic (FRP) where a thermosetting resin is the matrix resin.

In the method, the depolymerization solution comprises a compound represented by the chemical formula XOmYn wherein X is hydrogen or an alkali metal or an alkaline earth metal, Y is halogen, m satisfies 1 ≤ m ≤ 8, and n satisfies 1 ≤ n ≤ 6; and a reaction solvent, and in the reaction solvent, X can be dissociated from XOmYn and Y radical can be provided; or the depolymerization solution comprises a transition metal salt comprising a transition metal; and a reaction solvent, wherein in the reaction solvent, the transition metal salt can be dissociated and an oxidation reaction of a cured epoxy resin mediated by a transition metal can occur.

In an example embodiment, the reaction solvent is a H₂O-based reaction solvent comprising H₂O and having a dielectric constant of 65 or more, 70 or more, 75 or more, or 80 or more.

In an example embodiment, the reaction solvent is water alone.

In an example embodiment, the compound is one or more selected from the group consisting of HOF, HOCI, HOBr, HOI, NaOF, NaOCl, NaOBr, NaOI, LiOF, LiOCl, LiOBr, LiOI, KOF, KOCI, KOBr, KOI, HO₂F, HO₂Cl, HO₂Br, HO₂I, NaO₂F, NaO₂Cl, NaO₂Br, NaO₂I, LiO₂F, LiO₂Cl, LiO₂Br, LiO₂I, KO₂F, KO₂Cl, KO₂Br, KO₂I, Ca(OF)₂, Ca(OCl)₂, Ca(OBr)₂, Ca(OI)₂, HO₃F, HO₃Cl, HO₃Br, HO₃I, NaO₃F, NaO₃Cl, NaO₃Br, NaO₃I, LiO₃F, LiO₃Cl, LiO₃Br, LiO₃I, KO₃F, KO₃Cl, KO₃Br, KO₃I, HO₄F, HO₄Cl, HO₄Br, HO₄I, NaO₄F, NaO₄Cl, NaO₄Br, NaO₄I, LiO₄F, LiO₄Cl, LiO₄Br, LiO₄I, KO₄F, KO₄Cl, KO₄Br, KO₄I, NaOCl₆, MgO₆F₂, MgO₆Cl₂, MgO₆Br₂, MgO₆I₂, CaO₆F₂, CaO₆Cl₂, CaO₆Br₂, CaO₆I₂, SrO₆F₂, SrO₆Cl₂, SrO₆Br₂, SrO₆I₂, BaO₆F₂, BaO₆Cl₂, BaO₆Br₂, BaO₆I₂, NaOCl₃,NaOCl₄, MgO₈Cl₂, CaO₈Cl₂, SrO₈Cl₂, and BaO₈Cl₂.

In an example embodiment, the transition metal salt is one or more selected from the group consisting of KMnO₄, MnO₂, K₂MnO₄, MnSO₄, CrO₃, Na₂Cr₂O₇, K₂Cr₂O₇, ZnCr₂O₇, H₂CrO₄, pyridinium chlorochromate, pyridinium dichromate, V₂O₅, RuCl₃, RuO₂, tetrapropylammonium perruthenate, MoO₃, K₃[Fe(CN)₆], FeCl₃, Fe(NO₃)₃ nonahydrate, MeReO₃, CuCl, Cu(ClO₄)₂, Cu(HCO₂)₂Ni(HCO₂)₂, Cu(OAc)₂, OsO₄, and (NH₄)₂Ce(NO₃)₆.

Further, provided is an apparatus for repairing composite materials comprising a matrix resin and a filler fiber using a solvation process, comprising: a depolymerization solution supply device for providing a depolymerization solution capable of depolymerizing the matrix resin to a portion to be repaired of the composite material.

Further, an apparatus according to the invention comprises a depolymerization solution storage device for storing a solution capable of depolymerizing the resin; and the depolymerization solution supply device for receiving a depolymerization solution from the depolymerization solution storage device and supplying it to the portion to be repaired of the composite material.

An apparatus according to the invention further comprises a heater for heating a depolymerization solution.

An apparatus according to the invention further comprises as for the depolymerization solution storage device, a depolymerization solution storage tank;
as for the depolymerization solution supply device, a depolymerization solution contact device for receiving a depolymerization solution from the depolymerization solution storage tank and providing it such that the solution contacts the portion to be repaired of fiber reinforced plastic;
as for the heater, a heater tank for accommodating and heating the depolymerization solution whose temperature becomes lowered after the contact with the portion to be repaired; and
a pump for circulating a depolymerization solution between the depolymerization solution storage tank and the heater tank.

An apparatus according to the invention further comprises:
as for the depolymerization solution storage device, a depolymerization solution storage tank;
as for the depolymerization solution supply device, a depolymerization solution contact device for receiving a depolymerization solution from the depolymerization solution storage tank and providing it such that the solution contacts the portion to be repaired of fiber reinforced plastic;
as for the heater a heater for heating the depolymerization solution storage tank; and
a pump for circulating a depolymerization solution from the depolymerization solution storage tank to the depolymerization solution contact device.

An apparatus according to the invention further comprises:
as for the depolymerization solution storage device, a depolymerization solution storage tank;
as for the depolymerization solution supply device, a depolymerization solution contact device for receiving a depolymerization solution from the depolymerization solution storage tank and providing it such that the solution contacts the portion to be repaired of fiber reinforced plastic;
as for the heater, a heater for heating a depolymerization solution transfer pipe located between the depolymerization solution storage tank and the depolymerization solution contact device; and
a pump for circulating a depolymerization solution from the depolymerization solution storage tank to the depolymerization solution contact device.

In an example embodiment, the deolymerization solution contact devices further comprise a vacuum absorber.

In an example embodiment, the depolymerization solution contact devices further comprise a spray nozzle for spraying a depolymerization solution; and a recovery pipe for recovering the depolymerization solution after contact with the portion to be repaired.

In an example embodiment, the heater heats a depolymerization solution to 20-200 °C or 20-100 °C.

In an example embodiment, the apparatus further comprises a pretreatment apparatus, and the pretreatment apparatus comprises a pretreatment solution storage device for storing a pretreatment solution for depolymerization; and a pretreatment discharge device capable of discharging a pretreatment solution.

In an example embodiment, the pretreatment solution is acetic acid, and the storage device comprises a sealed container for preventing volatilization of acetic acid and a carrier for carrying acetic acid within the container.

In an example embodiment, the pretreatment apparatus is in the shape of a pen.

An apparatus according to the invention further comprises a resin supply device for providing a matrix resin to the fiber skeleton obtained after depolymerization.

In an example embodiment, the apparatus further comprises a sewing device for further reinforcing the fiber skeleton obtained after depolymerization with fiber.

### BRIEF DESCRIPTION OF THE DRAWINGS

The above and other aspects, features and advantages of the disclosed example embodiments will be more apparent from the following detailed description taken in conjunction with the accompanying drawings in which:
FIG. 1 is a schematic diagram showing a flow of the process for repairing a broken or damaged fiber reinforced plastic by means of solvation of the fiber reinforced plastic structure according to an example embodiment of the present invention.
FIG. 2 is a schematic diagram showing an apparatus for repairing a fiber reinforced plastic structure according to an example embodiment of the present invention.
FIG. 3 is a schematic diagram showing a solution contact device in an apparatus for repairing a fiber reinforced plastic structure according to an example embodiment of the present invention.
FIG. 4 is a schematic diagram showing an apparatus for repairing a fiber reinforced plastic structure according to another example embodiment of the present invention.
FIG. 5 is a schematic diagram showing a solution contact device using vacuum in an apparatus for repairing a fiber reinforced plastic structure according to yet another example embodiment of the present invention.
FIG. 6 is a schematic diagram showing an apparatus for repairing a fiber reinforced plastic structure according to yet another example embodiment of the present invention.
FIG. 7 is a schematic diagram showing an apparatus for repairing a fiber reinforced plastic structure according to yet another example embodiment of the present invention.
FIG. 8 is a schematic diagram showing an apparatus for repairing a fiber reinforced plastic structure according to yet another example embodiment of the present invention.
FIG. 9 is a schematic diagram showing the portion to be repaired of an aircraft nose cone in an example embodiment of the present invention.
FIG. 10A is a photograph showing the sample of Example 1 of the present invention before 12-hour partial solvation treatment.
FIG. 10B is a photograph showing the sample of Example 1 of the present invention after 12-hour partial solvation treatment.

### DETAILED DESCRIPTION

Example embodiments are described more fully hereinafter. The present invention may, however, be embodied in many different forms and should not be construed as limited to the example embodiments set forth herein. Rather, these example embodiments are provided so that this disclosure will be thorough and complete, and will fully convey the scope of the invention to those skilled in the art. In the description, details of features and techniques may be omitted to more clearly disclose example embodiments.

### Term Definition

In the present disclosure, the term 'composite material' refers to a composite material comprising a resin as a matrix material and a filled material such as a fiber. These composite material may include, for example, fiber reinforced plastic (FRP) structures, particularly carbon fiber reinforced plastic (CFRP).

In the present disclosure, the term 'fiber reinforced plastic (FRP) structure' refers to a structure obtained by applying plastic reinforced by fiber such as a carbon fiber or a glass fiber, etc. It may include, for example, a main body of automobiles or aircraft, etc., and in particular, in the case of aircraft, a nose cone of aircraft.

In the present disclosure, the expression 'portion to be repaired' refers to a portion to be repaired in a composite material. In particular, it may refer to a portion in the thickness direction of a composite material such as a fiber reinforced plastic structure, etc.

In the present disclosure, the term 'epoxy resin' covers not only cured epoxy resin but also partially cured epoxy resin or intermediate produced during curing (so-called epoxy resin prepolymer or prepreg).

The epoxy resin is produced by a curing reaction between an epoxy compound having two or more epoxy groups within the molecule and a curing agent. The epoxy compound and the curing agent are not particularly limited. The epoxy compound may include, for example, a polyfunctional epoxy compound, etc. The curing agent may include, for example, those having an aromatic group or an aliphatic group. Also, the curing agent may be a curing agent having one or more groups selected from amine groups, acid anhydride groups, imidazole groups, and mercaptan groups within the molecule.

In the present disclosure, the term 'organic solvent reaction system' refers to a reaction system using an organic solvent as a main solvent of the depolymerization reaction of a thermosetting resin.

In the present disclosure, the term 'H₂O reaction system' refers to a reaction system using H₂O as a main solvent of the depolymerization reaction of a thermosetting resin. This system, which is in contrast to the organic solvent reaction system, uses a H₂O-based reaction solvent in depolymerization reaction. The H₂O-based reaction solvent may include another solvent in addition to H₂O (that is, it may be a mixed solvent), but even when the solvent is a mixed one, the solvent must have a dielectric constant of at least 65 or more, preferably 70 or more, 75 or more, or 80 or more. Particularly preferably, the H₂O-based reaction solvent consists of H₂O alone (water has a dielectric constant of about 80.2).

In the present disclosure, the term 'depolymerization time' refers to a depolymerization reaction time required for decomposing all the thermosetting resins such as an epoxy resin provided in a depolymerization reaction. Here, "decomposing all" means that the carbon fiber skeleton exists and there is substantially no thermosetting resin (solid matter) such as an epoxy resin (residual rate of a thermosetting resin is 5% or less). For reference, the decomposition rate (%) of the thermosetting resin can be calculated as follows: Decomposition rate (%) = [(amount of the thermosetting resin in CFRP - residue amount of the thermosetting resin after decomposition) / (amount of the thermosetting resin in CFRP)] x 100. The thermosetting resin residual rate is calculated as 100% - decomposition rate.

In the present disclosure, the dielectric constant may be measured by using a dielectric constant meter.

In the present disclosure, the term "Y (Y = halogen) radical" refers to ·Y having a noncovalent unpaired electron, for example, ·F, ·Cl, ·Br and ·I.

In the present disclosure, the expression "oxidation reaction mediated by a transition metal salt comprising a transition metal" refers to an oxidation reaction in which a part of the electrons constituting a chemical bond, for example, a carbon-carbon bond of an organic compound, for example, a cured epoxy resin transfer to a transition metal with a change in the oxidation number of the transition metal, resulting in oxidation.

### Description of Example Embodiments

Hereinafter, example embodiments of the present invention will be described in detail.

In example embodiments, provided is a method for repairing composite materials, for example, composite materials comprising a matrix resin and a filler fiber using a solvation process, comprising: providing a solution capable of depolymerizing the matrix resin to a portion to be repaired of the composite material to depolymerize the matrix resin.

In this way, a part or all of the resin constituting a composite material such as fiber reinforced plastic is removed by solvation (depolymerization) with a solvent while leaving only the internal filler fibers (fiber skeleton), thus securing the continuity of the fiber skeleton, allowing easy repair, and minimizing damage to the fiber skeleton.

In an example embodiment, the method may further comprise reimpregnating a matrix resin into the fiber skeleton structure remaining after the depolymerization of the matrix resin.

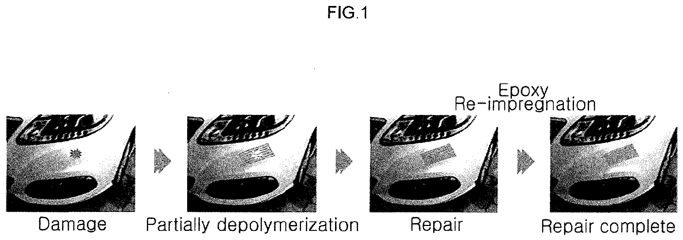

FIG. 1 is a schematic diagram showing a flow of the process for repairing broken or damaged fiber reinforced plastic (hereinafter this may be referred to as "FRP") by means of solvation of the fiber reinforced plastic structure according to an example embodiment of the present invention.

As illustrated in FIG. 1, for example, when FRP is partially damaged, a repair is performed by partially dissolving the matrix resin (a thermosetting resin such as epoxy resin or urethane resin, etc. or a thermoplastic resin) of the broken part to maintain only the fiber skeleton structure as it is, and then re-impregnating it with a matrix resin material.

In an example embodiment, the method may further comprise pretreating the composite material with an acidic material prior to depolymerization. The pretreatment can facilitate the progress of the subsequent depolymerization.

In a non-limiting example, for example, acetic acid may be used as a pretreatment solution for depolymerization. In addition, a pretreatment solution discharge apparatus capable of effectively carrying a pretreatment solution such as acetic acid, etc. and discharging the pretreatment solution such as acetic acid locally to a portion to be repaired may be used.

A material for carrying a pretreatment solution such as acetic acid in the pretreatment solution discharge apparatus may include hydrogels, fibrous materials, polymer carriers, porous materials, etc. Further, in the pretreatment solution discharge apparatus, the pretreatment solution such as acetic acid, etc. may be contained in a container so as to prevent volatilization.

In addition, the pretreatment solution discharge apparatus may have a pen-like shape. The pretreatment solution discharge apparatus must be able to fixate a portion to be repaired during the pretreatment time after contacted with the portion to be repaired. The pretreatment time (1, 2, 4, 6, 12 hours, etc.) may be varied depending on the degree of damage.

In an example embodiment, the method may further comprise patching and sewing fibers to a part of the fiber skeleton, in case where the breakage or damage of the fiber skeleton is serious.

In example embodiments of the present invention, there is provided an apparatus for repairing composite materials, for example, materials comprising a matrix resin and a filler fiber, comprising: a depolymerization solution supply device for providing a depolymerization solution capable of depolymerizing the matrix resin to a portion to be repaired of the composite material.

In an example embodiment, the apparatus may comprise a depolymerization solution storage device for storing a solution capable of depolymerizing the matrix resin; and a depolymerization solution supply device for receiving a depolymerization solution from the depolymerization solution storage device and supplying it to the portion to be repaired of the composite material.

In an example embodiment, the apparatus may comprise a depolymerization solution storage tank as the depolymerization solution storage device; and a depolymerization solution contact device for receiving a depolymerization solution from the depolymerization solution storage tank and providing it such that the solution contacts the portion to be repaired of the fiber reinforced plastic. In addition, the apparatus may further comprise a heater tank for accommodating and heating the depolymerization solution whose temperature becomes lowered after the contact with the portion to be repaired; and a pump for circulating a depolymerization solution between the depolymerization solution storage tank and the heater tank.

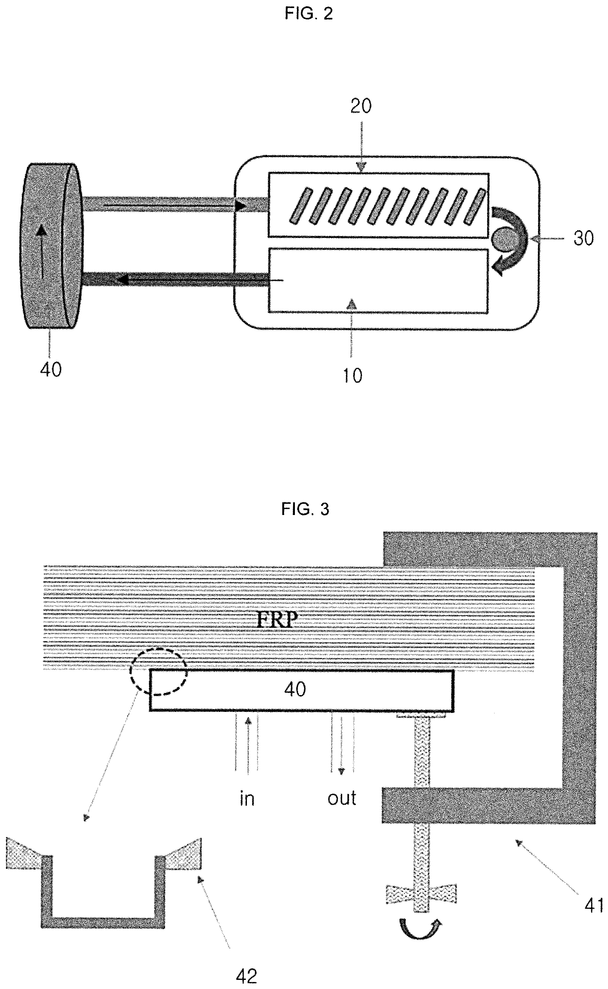

FIGS. 2, 4, 6 to 8 are schematic diagrams showing the apparatuses for repairing a fiber reinforced plastic structure according to example embodiments of the present invention.

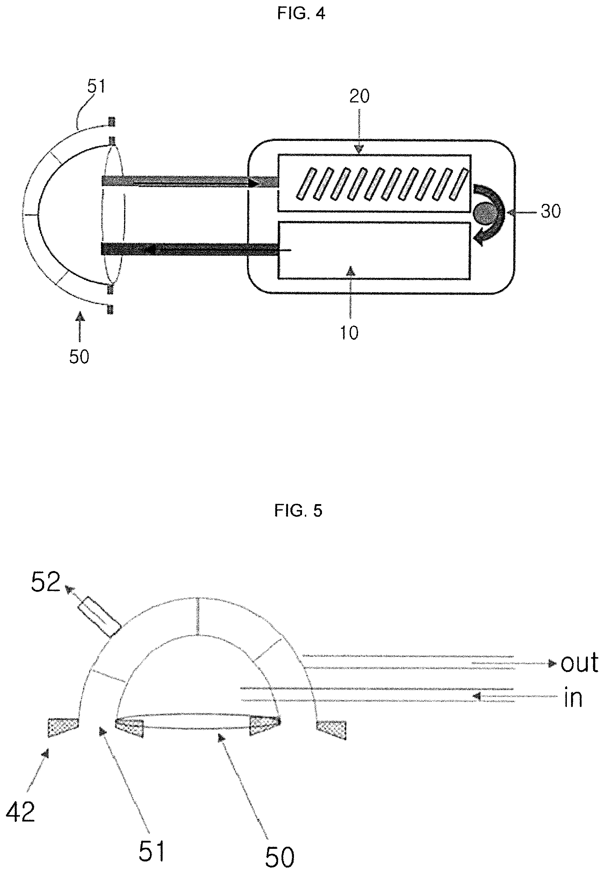

FIGS. 3 and 5 are schematic diagrams showing particularly the solution contact device in an apparatus for repairing a fiber reinforced plastic structure according to an example embodiment of the present invention.

As commonly illustrated in FIGS. 2, 4, and 6, the apparatus for partially solvating a fiber reinforced plastic structure according to example embodiments comprises a depolymerization solution storage tank (10) for storing a solution capable of depolymerizing the thermosetting resin of the fiber reinforced plastic structure, a depolymerization solution contact device (40, 50, 60) for receiving a depolymerization solution from the depolymerization solution storage tank (10) and providing it such that the solution contacts the portion to be repaired of the fiber reinforced plastic, a heater (20) for accommodating and heating the depolymerization solution whose temperature becomes lowered after the contact with the portion to be repaired which is equipped with a heating means, and a pump (30) for circulating a depolymerization solution between the depolymerization solution storage tank (10) and the solution contact device (40, 50, 60). The pump (30) may comprise a pump driving device (31) for driving it.

The depolymerization storage tank (10) may store a solution capable of depolymerizing fiber reinforced plastic and provide it to the depolymerization contact device (40, 50, 60).

The depolymerization solution is not limited as long as it is a solution capable of depolymerizing fiber reinforced plastic. However, preferably, the solution is a solution capable of rapid depolymerization under mild conditions at a low temperature.

In a non-limiting example, for example, when the thermosetting resin constituting the fiber reinforced plastic is an epoxy resin, it is preferable to use the depolymerization solution examples 1 and 2 as described below. The depolymerization solutions examples 1 and 2 below are preferable in that they are allowed to obtain only the fiber skeleton while leaving no residue of a thermosetting resin and enable to minimize damage to the fiber skeleton or the portions other than the portion to be repaired.

### Depolymerization Solution Example 1

As for the depolymerization solution, it is preferable to use an epoxy resin depolymerization solution comprising a compound represented by chemical formula XOmYn, wherein X is hydrogen or an alkali metal or an alkaline earth metal, Y is halogen, m is a number satisfying 1 ≤ m ≤ 8, and n is a number satisfying 1 ≤ n ≤ 6, and a reaction solvent, wherein in the reaction solvent, X can be dissociated from XOmYn and Y radical can be provided.

It is believed that in depolymerization, X is dissociated in advance in the reaction solvent (especially H₂O-based reaction solvent) and finally Y radical, which has a noncovalent unpaired electron, that is, ·Y is produced. Also, it is believed that the Y radical (·Y) is bonded to C of a cured epoxy resin to form C-Y, resulting in depolymerization of the cured epoxy resin. The dielectric constant of the reaction solvent must be controlled at a predetermined value or higher in order to perform with low energy the dissociation of X, the production of Y radical and the depolymerization reaction of the Y radical to the cured epoxy resin.

Therefore, the reaction solvent is selected so as to be capable of dissociating X from XOmYn linked by an ionic bond and in which Y radicals can be effectively generated after dissociation of X. The reaction solvent is preferably an H₂O-based reaction solvent. In the depolymerization of an epoxy resin by using the compound represented by the chemical formula XOmYn, the dielectric constant of the H₂O-based reaction solvent used together affects the efficiency of the depolymerization reaction of the epoxy resin. The dielectric constant of the H₂O-based reaction solvent must be at least 65 or more, or 70 or more, 75 or more, or 80 or more. When the dielectric constant is 65 or more, the reaction efficiency starts to increase sharply. Particularly preferably, the H₂O-based reaction solvent consists of H₂O alone (water has a dielectric constant of about 80.2). When the H₂O-based reaction solvent is H₂O alone, the efficiency of the decomposition of the cured epoxy resin starts to increase drastically. In contrast, in an organic solvent-based reaction system, organic solvent solvates epoxy resin directly using the organic solvent as the main solvent. When XOmYn is added to the organic solvent, X cannot be dissociated and a Y radical to be used for depolymerization of a cured epoxy resin cannot be produced. For example, NMP has a dielectric constant of 32 and does not solvate XOmYn.

In a non-limiting example, X in the XOmYn represents hydrogen or an alkali metal such as lithium, potassium, sodium, etc. or an alkaline earth metal such as calcium, magnesium, etc. In an example embodiment, Y in the XOmYn represents a halogen element such as F, Cl, Br, I, etc.

In a non-limiting example, m and n may be a natural number within the above range. However, they are not limited to a natural number, and may be a decimal fraction, for example, in the case of forming a complex.

In a non-limiting example, the compound may be one or more selected from the group consisting of HOF, HOCI, HOBr, HOI, NaOF, NaOCl, NaOBr, NaOI, LiOF, LiOCl, LiOBr, LiOI, KOF, KOCI, KOBr, KOI, HO₂F, HO₂Cl, HO₂Br, HO₂I, NaO₂F, NaO₂Cl, NaO₂Br, NaO₂I, LiO₂F, LiO₂Cl, LiO₂Br, LiO₂I, KO₂F, KO₂Cl, KO₂Br, KO₂I, Ca(OF)₂, Ca(OCl)₂, Ca(OBr)₂, Ca(OI)₂, HO₃F, HO₃Cl, HO₃Br, HO₃I, NaO₃F, NaO₃Cl, NaO₃Br, NaO₃I, LiO₃F, LiO₃Cl, LiO₃Br, LiO₃I, KO₃F, KO₃Cl, KO₃Br, KO₃I, HO₄F, HO₄Cl, HO₄Br, HO₄I, NaO₄F, NaO₄Cl, NaO₄Br, NaO₄I, LiO₄F, LiO₄Cl, LiO₄Br, LiO₄I, KO₄F, KO₄Cl, KO₄Br, KO₄I, NaOCl₆, MgO₆F₂, MgO₆Cl₂, MgO₆Br₂, MgO₆I₂, CaO₆F₂, CaO₆Cl₂, CaO₆Br₂, CaO₆I₂, SrO₆F₂, SrO₆Cl₂, SrO₆Br₂, SrO₆I₂, BaO₆F₂, BaO₆Cl₂, BaO₆Br₂, BaO₆I₂, NaOCl₃,NaOCl₄, MgO₈Cl₂, CaO₈Cl₂, SrO₈Cl₂, and BaO₈Cl₂.

In a non-limiting example, particularly preferably, the H₂O-based solvent is water alone.

In a non-limiting example, the depolymerization reaction temperature may be, for example, less than 250 °C (e.g., not less than 20 °C and less than 250 °C), not more than 200 °C (e.g., 20-200 °C) or not more than 100 °C (e.g., 20-100 °C or 20-70 °C). Therefore, the heating temperature of the heater tank (20) can be adjusted so as to maintain these temperatures.

In a non-limiting example, the compound of XOmYn may be present in an amount of 0.001-99 % by weight based on 100 % by weight of the total composition (reaction solvent + compound of XOmYn). In a non-limiting example, when the reaction solvent is, for example, an aqueous solution, the compound of XOmYn may be comprised in an amount of 0.001-99 % by weight based on the total aqueous solution comprising the compound of XOmYn.

In a non-limiting example, a cured epoxy resin may be present in an amount of 1-90 parts by weight based on 100 parts by weight of the depolymerization composition (reaction solvent + compound of XOmYn). In a non-limiting example, when the reaction solvent is an aqueous solution, a cured epoxy resin (e.g., CFRP) may be present in an amount of 1-90 parts by weight based on 100 parts by weight of the aqueous solution comprising the compound of XOmYn.

### Depolymerization Solution Example 2

As for the depolymerization solution, it is preferable to use a depolymerization solution comprising a transition metal salt or transition metal oxide comprising a transition metal (a metal element belonging to Groups 3 to 12 of the periodic table) and a reaction solvent.

To be more particular, it is believed that in depolymerization, an oxidation reaction mediated by a transition metal element, that is, an oxidation reaction of a cured epoxy resin through the change of the oxidation number of a transition metal element occurs in a reaction solvent. It is also believed that the chemical bond, for example, the carbon-carbon bond, of the cured epoxy resin breaks through such oxidation reaction, resulting the depolymerization of the cured epoxy resin. That is to say, unlike alkali metals having an oxidation number of +1 and alkaline earth metals having an oxidation number of +2, transition metals can have two or more oxidation states (oxidation numbers), and an oxidation reaction occurs due to a change in the two or more oxidation states (that is, decrease of the oxidation number) during the reaction. For example, manganese in potassium permanganate, which is a transition metal salt, has three oxidation states: oxidation number of +7 (potassium permanganate), oxidation number of +6 (potassium manganate) and oxidation number of +4 (manganese dioxide). In order for the relatively unstable oxidation state with an oxidation number of +7 to change to the stable one with an oxidation number of +4 during the reaction, an oxidation reaction takes place in which electrons are withdrawn from the chemical bond, for example, the carbon-carbon bond of a cured epoxy resin, which is an organic compound.

Meanwhile, the dielectric constant of the reaction solvent must be controlled at a predetermined value or higher in order to perform the oxidation reaction with low energy. Therefore, in order to increase the reaction efficiency, the dielectric constant of the reaction solvent must be 65 or more, 70 or more, 75 or more, or 80 or more.

The reaction solvent is preferably a H₂O-based reaction solvent, particularly preferably water alone. In the depolymerization of a cured epoxy resin by using composition comprising a transition metal salt or transition metal oxide comprising a transition metal, the dielectric constant of the H₂O-based reaction solvent used together affects the efficiency of the depolymerization reaction of the cured epoxy resin. It is believed that this is because unlike an organic solvent in an organic solvent reaction system, the H₂O-based reaction solvent can accelerate the solvation and/or ion dissociation of the transition metal salt or the transition metal oxide, and because it is involved in the oxidation reaction of the chemical bond, for example, the carbon-carbon bond in the epoxy resin mediated by a transition metal element, thereby contributing to the depolymerization reaction efficiency of the epoxy resin. The dielectric constant of the H₂O-based reaction solvent must be at least 65 or more, or 70 or more, 75 or more, or 80 or more. Particularly preferably, the H₂O-based reaction solvent consists of H₂O alone (water has a dielectric constant of about 80.2). When the H₂O-based reaction solvent is H₂O alone, the efficiency of the decomposition of a cured epoxy resin starts to increase drastically. In contrast, in an organic solvent-based reaction system, organic solvent solvates epoxy resin directly using the organic solvent as the main solvent. Even when a transition metal salt is added to an organic solvent, it cannot contribute to depolymerization of the epoxy resin because the solubility and the degree of ion dissociation are low. For example, NMP has a dielectric constant of 32 and does not solvate a transition metal salt.

In a non-limiting example, the depolymerization reaction temperature may be, for example, less than 250 °C (e.g., 20-250 °C), not more than 200 °C (e.g., 20-200 °C) or not more than 100 °C (e.g., 20-100 °C or 20-70 °C). Therefore, as with the depolymerization solution 1, the heating temperature of the heater tank (20) can be adjusted so as to maintain these temperatures.

In a non-limiting example, the transition metal salt or transition metal oxide comprising a transition metal may be, for example, KMnO₄, MnO₂, K₂MnO₄, MnSO₄, CrO₃, Na₂Cr₂O₇, K₂Cr₂O₇, ZnCr₂O₇, H₂CrO₄, pyridinium chlorochromate, pyridinium dichromate, V₂O₅, RuCl₃, RuO₂, tetrapropylammonium perruthenate, MoO₃, K₃[Fe(CN)₆], FeCl₃, Fe(NO₃)₃ nonahydrate, MeReO₃, CuCl, Cu(ClO₄)₂, Cu(HCO₂)₂Ni(HCO₂)₂, Cu(OAc)₂, OsO₄, (NH₄)₂Ce(NO₃)₆, etc.

In a non-limiting example, the transition metal salt or transition metal oxide may be present in an amount of 0.001-99 % by weight based on the weight of the total composition (H₂O-based reaction solvent + transition metal salt or transition metal oxide). In a non-limiting example, when the H₂O reaction solvent is, for example, an aqueous solution, the transition metal salt or the transition metal oxide may be comprised in an amount of 0.001-99%, or for example 0.001-50%, by weight based on the total aqueous solution comprising the transition metal salt or the transition metal oxide.

In a non-limiting example, a cured epoxy resin may be present in amount of 1-90 parts by weight based on 100 parts by weight of the depolymerization composition (H₂O reaction solvent + transition metal salt or transition metal oxide). In a non-limiting example, when the H₂O reaction solvent is an aqueous solution, a cured epoxy resin may be present in amount of 1-90 parts by weight based on 100 parts by weight of the aqueous solution comprising the transition metal salt or the transition metal oxide.

Next, the depolymerization solution contact device (40, 50, 60) will be explained.

The depolymerization solution contact device (40, 50, 60) allows the depolymerization solution supplied from the depolymerization solution storage tank (10) to contact the portion to be repaired.

For example, the contact device (40) of FIG. 2 may comprise an impregnation device capable of impregnating the portion to be repaired. Further, in another example, it may comprise an elastic absorbent that absorbs and retains the depolymerization solution. The absorbent contacts the portion to be repaired while holding a depolymerization solution, thus capable of continuously supplying the solution supplied from the depolymerization storage tank (10) to the portion to be repaired.

FIG. 3 shows the contact device (40) of the apparatus for repair according to yet another example embodiment of the present invention.

As illustrated in FIG. 3, the contact device (40) may further comprise a device (41) for tightly mounting and fixating the contact device (40) to FRP to allow the solution to contact only the portion to be repaired while preventing the solution from leaking outside the portion to be repaired. Further, for example, the contact device (40) may further comprise a side wing (42) comprised of a flexible material to allow the contact device (40) to be in close contact with FRP and thereby to prevent the solution from leaking.

The contact device (50) of FIG. 4 may further comprise a vacuum absorber (51) for tightly mounting and fixating the contact device (50) to FRP by vacuum to allow the solution to contact only the portion to be repaired while preventing the solution from leaking outside the portion to be repaired. FIG. 4 may also further comprise, although not illustrated therein, an air outlet (52) for extracting air as in FIG. 5 explained below.

FIG. 5 shows the contact device (50) of the apparatus for repair according to yet another example embodiment of the present invention.

As illustrated in FIG. 5, the contact device (50) may comprise a vacuum absorber (51) for tightly mounting and fixating the contact device (50) to FRP by vacuum to allow the solution to contact only the portion to be repaired while preventing the solution from leaking outside the portion to be repaired and an air outlet (52) for extracting air to form vacuum. Here, the contact device (50) may also comprise a side wing (42) of a flexible material to allow a close contact with FRP and thereby to prevent the solution from leaking.

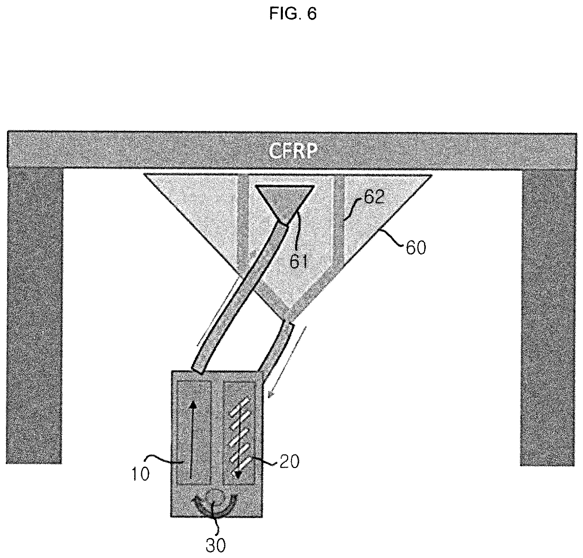

FIGS. 6 to 8 are schematic diagrams showing the apparatus for repairing a fiber reinforced plastic structure according to yet other example embodiments of the present invention.

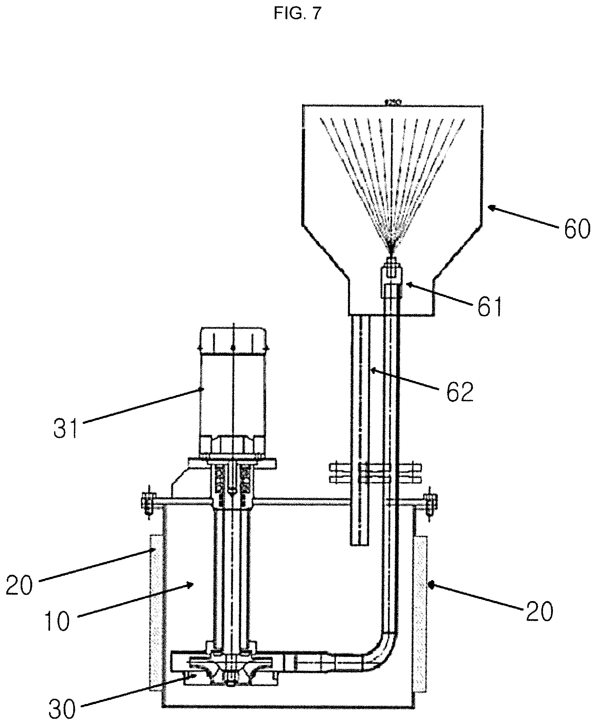

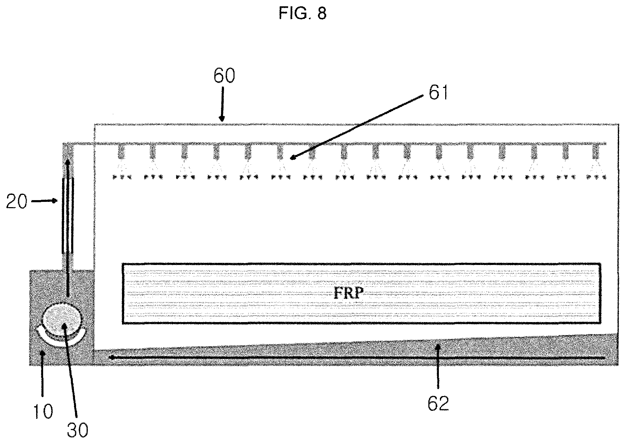

As commonly illustrated in FIGS. 6 to 8, the contact device (60) of FIGS. 6 to 8 comprises a spray nozzle (61) for allowing the depolymerization solution supplied from the depolymerization solution storage tank (10) to contact with the FRP to be repaired, and a recovery pipe (62) for recovering the sprayed solution. In FIGS. 6 and 7, the spray nozzle may be installed so as to move over the portion to be repaired of fiber reinforced plastic. In FIG. 8, the contact device (60) itself is in the form of a housing accommodating FRP, within which the spray nozzle (61) and the recovery pipe (62) are located.

As illustrated in FIGS. 2, 4 and 6, the temperature of the depolymerization solution which has passed through the contact device (40, 50 and 60) as described above drops after depolymerization. Accordingly, the solution is transferred back to a heater (20) equipped with a heating means, and at the heater (20), the temperature is raised to a temperature capable of depolymerization. Then, the heated depolymerization solution is sent back to the depolymerization solution storage tank (10) through the pump (30).

The above apparatus and process is only an example, and the order or installment manner of the solution storage tank (10), the heater (20), the pump (30), and the contact device (40, 50, 60) may be varied.

For example, in FIG. 7 of another example embodiment, a depolymerization solution is supplied to the contact device (60) from the depolymerization solution storage tank (10) through the pump (30), and the heater (20) may be a heater attached to a side of a container comprising the depolymerization solution storage tank (10), by which the temperature of the entire depolymerization solution storage tank (10) can be maintained at a predetermined temperature or higher. The solution recovered from the recovery pipe (62) may directly enter the depolymerization solution storage tank (10). FIG. 7 further illustrates the driving portion (31) for driving the pump (30)

On the other hand, in FIG. 8 of yet another example embodiment, a depolymerization solution is supplied to the contact device (60) from the depolymerization solution storage tank (10) through the pump (30), and the heater (20) may be a heater installed in the depolymerization solution transfer pipe located between the depolymerization solution storage tank (10) and the contact device (60). This is to provide a depolymerization solution to the contact device (60) while maintaining the solution at a constant temperature. The solution recovered from the recovery pipe (62) may directly enter the depolymerization solution storage tank (10).

In example embodiments, the apparatus for repair may perform a repair comprising depolymerizing the portion to be repaired as described above, providing a thermosetting resin thereto and curing it.

In an example embodiment, if there is a breakage in the fiber skeleton obtained after a part or all of the resin is removed by the apparatus for repair, facilitating the continuity of the fiber skeleton by means of a sewing process to patch a part of the fiber skeleton and then providing and curing a thermosetting resin may be further performed.

The fiber skeleton remaining after partial solvation of the matrix portion of the damaged area may be subjected to the following methods depending on the degree of the breakage.

That is, when there is almost no breakage of the fiber skeleton, a matrix material may be reimpregnated after aligning the fiber skeleton of the solvated portion such that it can maintain a structure like that of the fiber skeleton of the not solvated portion.

When the fiber skeleton is broken but the breakage is not serious, a matrix material may be reimpregnated after improving the continuity of the fiber skeleton by using a sewing machine, etc.

On the other hand, when the breakage of the fiber skeleton is serious, a matrix material may be reimpregnated after recovering the skeleton by patching a structure having the same structure as the original fiber skeleton constituting the FRP and by connecting it with the existing skeleton by using a sewing machine, etc.

In an example embodiment, the portion to be repaired may be a part in the thickness direction of the structure.

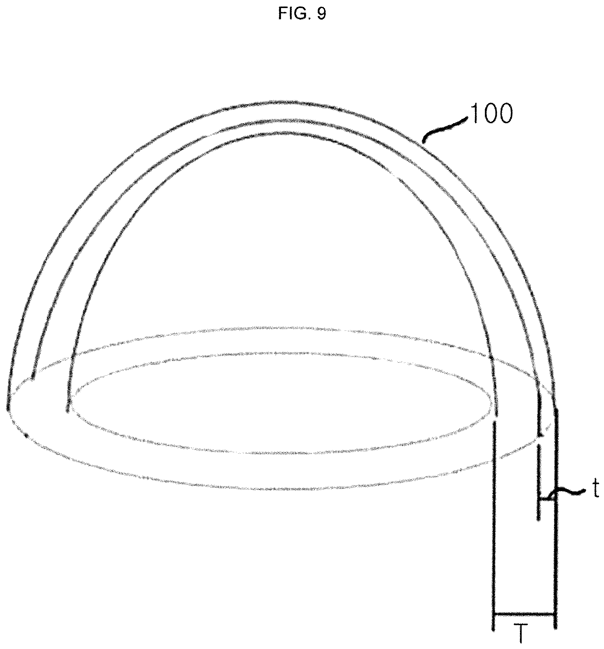

FIG. 9 shows an example of the portion to be repaired of an aircraft nose cone, which is an example of the cured fiber reinforced resin according to an example embodiment of the present invention.

As shown in FIG. 9, a repair may be performed on a part (t) in the thickness (T) direction of a structure such as a nose cone by means of the apparatus and method for repair according to example embodiments of the present invention.

In an example embodiment, conventional FRP manufacturing processes such as conventional hand lay-up, RTM (resin transfer molding), filament winding, laminate, resin spray transfer, etc. may be used for re-impregnation of a matrix material.

Hereinafter, specific examples according to example embodiments of the present invention will be described in more detail. It should be understood, however, that the invention is not limited to the examples described below, but that various forms of examples may be implemented within the scope of the appended claims. It will be understood that the examples below are to make the disclosure perfect and to make those skilled in the art carry out the invention easily.

### [Partial Depolymerization Example 1: Repair through partial solvation of the cured epoxy resin in CFRP using sodium hypochlorite (NaOCl) aqueous solution and the apparatus of FIG. 7]

The cured epoxy resin to be repaired used in Example 1 is carbon fiber reinforced plastic (CFRP). The waste CFRP is composed of a carbon fiber and a cured epoxy resin obtained by using an epoxy compound in the form of a diglycidyl ether of bisphenol A and an aromatic curing agent comprising an aromatic amine group. It is known that in general, it is very difficult to decompose the CFRP because it uses an aromatic curing agent.

Acetic acid gel is attached to the portion where epoxy resin is to be partially solvated of the in-house produced CFRP to be repaired and pretreatment is performed for 1, 2, 4, 6 and 12 hours.

Meanwhile, 500 ml of a 10% sodium hypochlorite and 1.5 liters of water are put into the apparatus shown in FIG. 7 and heated to 80 °C. Then, spraying is performed onto the pretreated portion at a discharge rate of 10 liters/min for 12 hours.

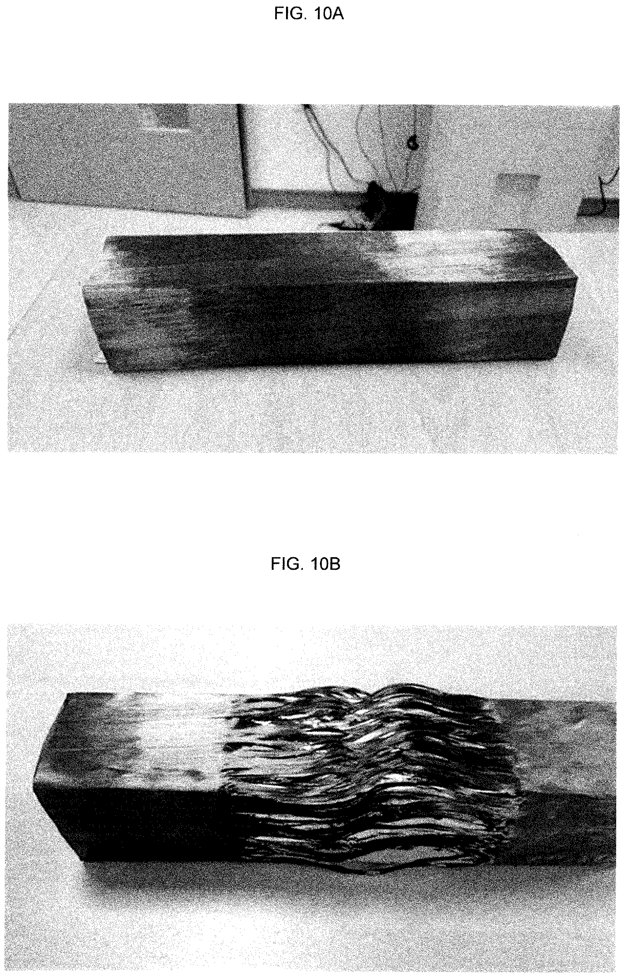

FIGS. 10A and 10B are a photograph showing the sample of Example 1 before (FIG. 10A) and after (FIG. 10B) the 12-hour partial solvation treatment.

As can be seen from FIGS. 10A and 10B, only the middle portion is partially solvated, and both sides other than the middle portion remain in their original shape. Further, it can be seen that the partially solvated portion maintains the fiber skeleton and secures continuity with the fiber skeleton of the portion not solvated.

### [Partial Depolymerization Example 2: Repair through partial solvation of the cured epoxy resin in CFRP using potassium permanganate (KMnO4) aqueous solution and the apparatus of FIG. 2]

The cured epoxy resin used in Example 2 is carbon fiber reinforced plastic (CFRP). The waste CFRP is composed of a carbon fiber and a cured epoxy resin obtained by using an epoxy compound in the form of a diglycidyl ether of bisphenol A and an aromatic curing agent comprising an aromatic amine group.

A cotton ball dampened with acetic acid is attached to the portion where epoxy resin is to be partially solvated of the in-house produced CFRP to be repaired and pretreatment is performed for 1, 2, 4, 6 and 12 hours.

57 mol/l of potassium permanganate and 2 liters of water are put into the apparatus of FIG. 2 and heated to 80 °C. Then, the contact device is connected to the pretreated portion and the solution is circulated at a discharge rate of 10 liters/min for 12 hours. The result shows that an epoxy resin only in the portion on which water was circulated is solvated.

According to example embodiments of the present invention, a matrix resin only in the broken or damaged portion of a composite material such as fiber reinforced plastic (FRP) are removed by solvation with a solution while leaving internal filler fibers (fiber skeleton), thus allowing to secure continuity between the fibers even after the repair. Accordingly, it is possible to obtain a similar strength to the original composite material even after the repair, by reimpregnating a matrix material. Thus, it is possible to solve the problem that cannot be avoided in the conventional repair technology of physically removing the broken or damaged portion of a composite material such as fiber reinforced plastic (FRP) and filling the grooved portion after the removal with new FRP, that is, the problem that the continuity between the filler fibers of the nonbroken portion and the filler fibers of the newly filled portion cannot be secured.

Further, example embodiments of the present invention may allow very easy repair and enable to minimize damage to internal filler fibers (fiber skeleton) during the repair of a composite material. Also, it is possible not to cause damage such as cracks, etc. to the structure portions other than the portion to be repaired.

## Claims

1. A method for repairing composite material comprising a matrix resin and a filler fiber using a solvation process by an apparatus, comprising: providing, from a depolymerization solution supply device, a depolymerization solution capable of depolymerizing the matrix resin to a portion to be repaired of the composite material, and
re-impregnating the matrix resin into a fiber skeleton structure remaining after the depolymerization of the matrix resin,
wherein the depolymerization solution comprises a compound represented by the chemical formula XOmYn wherein X is hydrogen or an alkali metal or an alkaline earth metal, Y is halogen, m satisfies 1 ≤ m ≤ 8, and n satisfies 1 ≤ n ≤ 6; and a reaction solvent, and in the reaction solvent, X can be dissociated from XOmYn and Y radical can be provided; or
the depolymerization solution comprises a transition metal salt comprising a transition metal; and a reaction solvent, wherein in the reaction solvent, the transition metal salt can be dissociated and an oxidation reaction of a cured epoxy resin mediated by a transition metal can occur,
wherein the apparatus comprises a depolymerization solution storage tank (10), a depolymerization solution contact device (40, 50, 60) for receiving a depolymerization solution from the depolymerization solution storage tank (10) and providing it such that the solution contacts the portion to be repaired of composite material, the storage tank (10) and the contact device (40, 50, 60) constituting the depolymerization solution supply device, a heater tank for accommodating and heating the depolymerization solution whose temperature becomes lowered after the contact with the portion to be repaired, a pump (30) for circulating a depolymerization solution between the depolymerization solution storage tank (10) and the heater tank, and a resin supply device for providing a matrix resin to a fiber skeleton obtained after depolymerization.

2. The method for repairing composite material using a solvation process according to claim 1, wherein the reaction solvent is a H₂O-based reaction solvent comprising H₂O and having a dielectric constant of 65 or more, 70 or more, 75 or more, or 80 or more.

3. The method for repairing composite material using a solvation process according to claim 1, wherein the reaction solvent is water alone.

4. The method for repairing composite material using a solvation process according to any of claims 1 to 3, wherein the compound is one or more selected from the group consisting of HOF, HOCl, HOBr, HOI, NaOF, NaOCl, NaOBr, NaOI, LiOF, LiOCl, LiOBr, LiOI, KOF, KOCl, KOBr, KOI, HO₂F, HO₂Cl, HO₂Br, HO₂I, NaO₂F, NaO₂Cl, NaO₂Br, NaO₂I, LiO₂F, LiO₂Cl, LiO₂Br, LiO₂I, KO₂F, KO₂Cl, KO₂Br, KO₂I, Ca(OF)₂, Ca(OCl)₂, Ca(OBr)₂, Ca(OI)₂, HO₃F, HO₃Cl, HO₃Br, HO₃I, NaO₃F, NaO₃Cl, NaO₃Br, NaO₃I, LiO₃F, LiO₃Cl, LiO₃Br, LiO₃I, KO₃F, KO₃Cl, KO₃Br, KO₃I, HO₄F, HO₄Cl, HO₄Br, HO₄I, NaO₄F, NaO₄Cl, NaO₄Br, NaO₄I, LiO₄F, LiO₄Cl, LiO₄Br, LiO₄I, KO₄F, KO₄Cl, KO₄Br, KO₄I, NaOCl₆, MgO₆F₂, MgO₆Cl₂, MgO₆Br₂, MgO₆I₂, CaO₆F₂, CaO₆Cl₂, CaO₆Br₂, CaO₆I₂, SrO₆F₂, SrO₆Cl₂, SrO₆Br₂, SrO₆I₂, BaO₆F₂, BaO₆Cl₂, BaO₆Br₂, BaO₆I₂, NaOCl₃,NaOCl₄, MgO₈Cl₂, CaO₈Cl₂, SrO₈Cl₂, and BaO₈Cl₂.; and/or
wherein the transition metal salt is one or more selected from the group consisting of KMnO₄, MnO₂, K₂MnO₄, MnSO₄, CrO₃, Na₂Cr₂O₇, K₂Cr₂O₇, ZnCr₂O₇, H₂CrO₄, pyridinium chlorochromate, pyridinium dichromate, V₂O₅, RuCl₃, RuO₂, tetrapropylammonium perruthenate, MoO₃, K₃[Fe(CN)₆], FeCl₃, Fe(NO₃)₃ nonahydrate, MeReO₃, CuCl, Cu(ClO₄)₂, Cu(HCO₂)₂Ni(HCO₂)₂, Cu(OAc)₂, OsO₄, and (NH₄)₂Ce(NO₃)₆.

5. An apparatus for repairing composite materials comprising a matrix resin and a filler fiber using a solvation process, comprising:
a depolymerization solution storage tank (10);
a depolymerization solution contact device (40, 50, 60) for receiving a depolymerization solution from the depolymerization solution storage tank (10)and providing it such that the solution contacts the portion to be repaired of fiber-reinforced plastic;
a heater (20) for heating the depolymerization solution storage tank;
a pump (30) for circulating a depolymerization solution from the depolymerization solution storage tank (10) to the depolymerization solution contact device; and
a resin supply device for providing a matrix resin to a fiber skeleton obtained after depolymerization; and optionally,
wherein the apparatus further comprises a sewing device for further reinforcing a fiber skeleton obtained after depolymerization with fiber.

6. An apparatus for repairing composite materials comprising a matrix resin and a filler fiber using a solvation process, comprising:
a depolymerization solution storage tank (10);
a depolymerization solution contact device (40, 50, 60); for receiving a depolymerization solution from the depolymerization solution storage tank (10) and providing it such that the solution contacts the portion to be repaired of fiber-reinforced plastic;
a heater (20) for heating a depolymerization solution transfer pipe located between the depolymerization solution storage tank (10) and the depolymerization solution contact device (40, 50, 60);
a pump (30) for circulating a depolymerization solution from the depolymerization solution storage tank (10) to the depolymerization solution contact device (40, 50, 60); and
a resin supply device for providing a matrix resin to a fiber skeleton obtained after depolymerization; and optionally,
wherein the apparatus further comprises a sewing device for further reinforcing a fiber skeleton obtained after depolymerization with fiber.

7. The apparatus for repairing composite material using a solvation process according to any of claims 5 and 6, wherein the deolymerization solution contact device further comprises a vacuum absorber (51).

8. The apparatus for repairing composite material using a solvation process according to any of claims 5 to 7, wherein the depolymerization solution contact device further comprises a spray nozzle (61) for spraying a depolymerization solution; and a recovery pipe (62) for recovering the depolymerization solution after contact with the portion to be repaired.

9. The apparatus for repairing composite material using a solvation process according to any of claims 5 to 8, wherein the apparatus further comprises a pretreatment apparatus, and the pretreatment apparatus comprises a pretreatment solution storage device for storing a pretreatment solution for depolymerization; and a pretreatment discharge device capable of discharging a pretreatment solution; and optionally,
wherein the pretreatment solution is acetic acid, and the storage device comprises a sealed container for preventing volatilization of acetic acid and a carrier for carrying acetic acid within the container.

10. The apparatus for repairing composite materials using a solvation process according to claim 9, wherein the pretreatment apparatus is in the shape of a pen.

## Patentansprüche

1. Verfahren zur Reparatur von Verbundmaterial, umfassend ein Matrixharz und eine Füllfaser, mittels eines Solvatisierungsprozesses durch eine Vorrichtung, umfassend:
Bereitstellen einer Depolymerisationslösung, welche in der Lage ist ein Matrixharz zu depolymerisieren, von einer Depolymerisationslösungszuführeinrichtung in einem zu reparierenden Abschnitt des Verbundmaterials; und
Reimprägnieren des Matrixharzes in eine nach der Depolymerisation des Matrixharzes zurückbleibende Faserskelettstruktur,
wobei die Depolymerisationslösung eine durch die chemische Formel XOmYn dargestellte Verbindung, bei welcher X für Wasserstoff oder ein Alkalimetall oder ein Erdalkalimetall steht, Y für ein Halogen steht, m 1 ≤ m ≤ 8 erfüllt und n 1 ≤ n ≤ 6 erfüllt, und ein Reaktionslösungsmittel umfasst und X in dem Reaktionslösungsmittel von XOmYn dissoziierbar ist und ein Y-Radikal bereitstellbar ist; oder
die Depolymerisationslösung ein Übergangsmetallsalz mit einem Übergangsmetall und ein Reaktionslösungsmittel umfasst, wobei das Übergangsmetallsalz in dem Reaktionslösungsmittel dissoziierbar ist und eine durch ein Übergangsmetall vermittelte Oxidationsreaktion eines gehärteten Epoxidharzes erfolgen kann,
wobei die Vorrichtung einen Depolymerisationslösungsspeichertank (10), eine Depolymerisationslösungskontakteinrichtung (40, 50, 60), die dazu ausgebildet ist, eine Depolymerisationslösung aus dem Depolymerisationslösungsspeichertank (10) aufzunehmen und derart bereitzustellen, dass die Lösung mit dem zu reparierenden Abschnitt des Verbundmaterials in Kontakt gelangt, wobei der Speichertank (10) und die Kontakteinrichtung (40, 50, 60) die Depolymerisationslösungszuführeinrichtung bilden, einen Heiztank zum Aufnehmen und Erhitzen der Depolymerisationslösung, deren Temperatur nach dem Kontakt mit dem zu reparierenden Abschnitt absinkt, eine Pumpe (30) zum Zirkulieren einer Depolymerisationslösung zwischen dem Depolymerisationslösungsspeichertank (10) und dem Heiztank und eine Harzzuführeinrichtung zum Bereitstellen eines Matrixharzes für ein nach der Depolymerisation erhaltenes Faserskelett umfasst.

2. Verfahren zur Reparatur von Verbundmaterial, umfassend ein Matrixharz und eine Füllfaser, mittels eines Solvatisierungsprozesses nach Anspruch 1, wobei das Reaktionslösungsmittel ein Reaktionslösungsmittel auf H₂O-Basis ist, das H₂O umfasst und eine Dielektrizitätskonstante von 65 oder mehr, 70 oder mehr, 75 oder mehr oder 80 oder mehr aufweist.

3. Verfahren zur Reparatur von Verbundmaterial, umfassend ein Matrixharz und eine Füllfaser, mittels eines Solvatisierungsprozesses nach Anspruch 1, wobei es sich bei dem Reaktionslösungsmittel allein um Wasser handelt.

4. Verfahren zur Reparatur von Verbundmaterial, umfassend ein Matrixharz und eine Füllfaser, mittels eines Solvatisierungsprozesses nach einem der Ansprüche 1 bis 3, wobei es sich bei der Verbindung um mindestens eine Verbindung, ausgewählt aus der Gruppe, bestehend aus HOF, HOCl, HOBr, HOI, NaOF, NaOCl, NaOBr, NaOI, LiOF, LiOCl, LiOBr, LiOI, KOF, KOCl, KOBr, KOI, HO₂F, HO₂Cl, HO₂Br, HO₂I, NaO₂F, NaO₂Cl, NaO₂Br, NaO₂I, LiO₂F, LiO₂Cl, LiO₂Br, LiO₂I, KO₂F, KO₂Cl, KO₂Br, KO₂I, Ca(OF)₂, Ca(OCl)₂, Ca(OBr)₂, Ca(OI)₂, HO₃F, HO₃Cl, HO₃Br, HO₃I, NaO₃F, NaO₃Cl, NaO₃Br, NaO₃I, LiO₃F, LiO₃Cl, LiO₃Br, LiO₃I, KO₃F, KO₃Cl, KO₃Br, KO₃I, HO₄F, HO₄Cl, HO₄Br, HO₄I, NaO₄F, NaO₄Cl, NaO₄Br, NaO₄I, LiO₄F, LiO₄Cl, LiO₄Br, LiO₄I, KO₄F, KO₄Cl, KO₄Br, KO₄I, NaOCl₆, MgO₆F₂, MgO₆Cl₂, MgO₆Br₂, MgO₆I₂, CaO₆F₂, CaO₆Cl₂, CaO₆Br₂, CaO₆I₂, SrO₆F₂, SrO₆Cl₂, SrO₆Br₂, SrO₆I₂, BaO₆F₂, BaO₆Cl₂, BaO₆Br₂, BaO₆I₂, NaOCl₃,NaOCl₄, MgO₈Cl₂, CaO₈Cl₂, SrO₈Cl₂ und BaO₈Cl₂ handelt; und/oder wobei es sich bei dem Übergangsmetallsalz um mindestens ein Übergangsmetallsalz, ausgewählt aus der Gruppe, bestehend aus KMnO₄, MnO₂, K₂MnO₄, MnSO₄, CrO₃, Na₂Cr₂O₇, K₂Cr₂O₇, ZnCr₂O₇, H₂CrO₄, Pyridiniumchlorochromat, Pyridiniumdichromat, V₂O₅, RuCl₃, RuO₂, Tetrapropylammoniumperruthenat, MoO₃, K₃[Fe(CN)₆], FeCl₃, Fe(NO₃)₃-Nonahydrat, MeReO₃, CuCl, Cu(ClO₄)₂, Cu(HCO₂)₂Ni(HCO₂)₂, Cu(OAc)₂, OsO₄ und (NH₄)₂Ce(NO₃)₆ handelt.

5. Vorrichtung zur Reparatur von Verbundmaterialien, umfassend ein Matrixharz und eine Füllfaser, mittels eines Solvatisierungsprozesses, umfassend:
einen Depolymerisationslösungsspeichertank (10);
eine Depolymerisationslösungskontakteinrichtung (40, 50, 60), die dazu ausgebildet ist, eine Depolymerisationslösung aus dem Depolymerisationslösungsspeichertank (10) aufzunehmen und derart bereitzustellen, dass die Lösung mit dem zu reparierenden Abschnitt eines faserverstärkten Kunststoffes in Kontakt gelangt;
eine Heizeinrichtung (20) zum Beheizen des Depolymerisationslösungsspeichertanks;
eine Pumpe (30) zum Zirkulieren einer Depolymerisationslösung von dem Depolymerisationslösungsspeichertank (10) zu der Depolymerisationslösungskontakteinrichtung; und
eine Harzzuführeinrichtung zum Bereitstellen eines Matrixharzes für ein nach der Depolymerisation erhaltenes Faserskelett; und
wobei die Vorrichtung wahlweise des Weiteren eine Näheinrichtung zur weiteren Verstärkung eines nach der Depolymerisation erhaltenen Faserskeletts mit Fasern umfasst.

6. Vorrichtung zur Reparatur von Verbundmaterialien, umfassend ein Matrixharz und eine Füllfaser, mittels eines Solvatisierungsprozesses, umfassend:
einen Depolymerisationslösungsspeichertank (10);
eine Depolymerisationslösungskontakteinrichtung (40, 50, 60), die dazu ausgebildet ist, eine Depolymerisationslösung aus dem Depolymerisationslösungsspeichertank (10) aufzunehmen und derart bereitzustellen, dass die Lösung mit dem zu reparierenden Abschnitt eines faserverstärkten Kunststoffes in Kontakt gelangt;
eine Heizeinrichtung (20) zum Beheizen einer zwischen dem Depolymerisationslösungsspeichertank (10) und der Depolymerisationslösungskontakteinrichtung (40, 50, 60) befindlichen Depolymerisationslösungsüberführungsleitung;
eine Pumpe (30) zum Zirkulieren einer Depolymerisationslösung von dem Depolymerisationslösungsspeichertank (10) zu der Depolymerisationslösungskontakteinrichtung (40, 50, 60); und
eine Harzzuführeinrichtung zum Bereitstellen eines Matrixharzes für ein nach der Depolymerisation erhaltenes Faserskelett; und
wobei die Vorrichtung wahlweise des Weiteren eine Näheinrichtung zur weiteren Verstärkung eines nach der Depolymerisation erhaltenen Faserskeletts mit Fasern umfasst.

7. Vorrichtung zur Reparatur von Verbundmaterialien, umfassend ein Matrixharz und eine Füllfaser, mittels eines Solvatisierungsprozesses nach einem der Ansprüche 5 und 6, wobei die Depolymerisationslösungskontakteinrichtung des Weiteren einen Vakuumabsorber (51) umfasst.

8. Vorrichtung zur Reparatur von Verbundmaterial, umfassend ein Matrixharz und eine Füllfaser, mittels eines Solvatisierungsprozesses nach einem der Ansprüche 5 bis 7, wobei die Depolymerisationslösungskontakteinrichtung des Weiteren eine Sprühdüse (61) zum Versprühen einer Depolymerisationslösung und eine Rückführungsleitung (62) zum Rückführen der Depolymerisationslösung nach dem Kontakt mit dem zu reparierenden Abschnitt umfasst.

9. Vorrichtung zur Reparatur von Verbundmaterial, umfassend ein Matrixharz und eine Füllfaser, mittels eines Solvatisierungsprozesses nach einem der Ansprüche 5 bis 8, wobei die Vorrichtung des Weiteren eine Vorbehandlungsvorrichtung, welche einen Vorbehandlungslösungsspeichereinrichtung zum Aufbewahren einer Vorbehandlungslösung für die Depolymerisation umfasst, und eine Vorbehandlungslösungsabgabeeinrichtung zum Abgeben einer Vorbehandlungslösung umfasst; und
wobei es sich bei der Vorbehandlungslösung wahlweise um Essigsäure handelt und die Speichereinrichtung wahlweise einen dichten Behälter zur Verhinderung einer Verflüchtigung der Essigsäure und einen Trägerstoff zum Transport von Essigsäure innerhalb des Behälters umfasst.

10. Vorrichtung zur Reparatur von Verbundmaterialen, umfassend ein Matrixharz und eine Füllfaser, mittels eines Solvatisierungsprozesses nach Anspruch 9, wobei die Vorbehandlungsvorrichtung stiftförmig ausgebildet ist.

## Revendications

1. Procédé de réparation d'un matériau composite comprenant une résine matricielle et une fibre de charge à l'aide d'un processus de solvatation par un appareil, le procédé comprenant les étapes consistant à :
fournir, à partir d'un dispositif d'alimentation en solution de dépolymérisation, une solution de dépolymérisation capable de dépolymériser la résine matricielle à une partie à réparer du matériau composite, et
réimprégner la résine matricielle dans une structure squelettique fibreuse restant après la dépolymérisation de la résine matricielle,
dans lequel la solution de dépolymérisation comprend un composé représenté par la formule chimique XOmYn, dans laquelle X est l'hydrogène ou un métal alcalin ou un métal alcalino-terreux, Y est un halogène, m satisfait 1 ≤ m ≤ 8 et n satisfait 1 ≤ n ≤ 6 ; et un solvant de réaction, et dans le solvant de réaction, X peut être dissocié de XOmYn et un radical Y peut être fourni ; ou
la solution de dépolymérisation comprend un sel de métal de transition comprenant un métal de transition ; et un solvant de réaction, dans lequel, dans le solvant de réaction, le sel de métal de transition peut être dissocié et une réaction d'oxydation d'une résine époxy durcie médiée par un métal de transition peut se produire,
dans lequel l'appareil comprend un réservoir de stockage de solution de dépolymérisation (10), un dispositif de mise en contact avec la solution de dépolymérisation (40, 50, 60) destiné à recevoir une solution de dépolymérisation provenant du réservoir de stockage de solution de dépolymérisation (10) et à la fournir de telle sorte que la solution entre en contact avec la partie à réparer du matériau composite, le réservoir de stockage (10) et le dispositif de mise en contact (40, 50, 60) constituant le dispositif d'alimentation en solution de dépolymérisation, un réservoir chauffant destiné à recevoir et à chauffer la solution de dépolymérisation dont la température baisse après le contact avec la partie à réparer, une pompe (30) destinée à faire circuler une solution de dépolymérisation entre le réservoir de stockage de solution de dépolymérisation (10) et le réservoir chauffant, et
un dispositif d'alimentation en résine destiné à fournir une résine matricielle à un squelette fibreux obtenu après la dépolymérisation.

2. Procédé de réparation d'un matériau composite à l'aide d'un processus de solvatation selon la revendication 1, dans lequel le solvant de réaction est un solvant de réaction à base d'H₂O comprenant de l'H₂O et ayant une constante diélectrique de 65 ou plus, 70 ou plus, 75 ou plus ou 80 ou plus.

3. Procédé de réparation d'un matériau composite à l'aide d'un processus de solvatation selon la revendication 1, dans lequel le solvant de réaction est uniquement de l'eau.

4. Procédé de réparation d'un matériau composite à l'aide d'un processus de solvatation selon l'une quelconque des revendications 1 à 3, dans lequel le composé est un ou plusieurs composés choisis dans le groupe constitué par HOF, HOCl, HOBr, HOI, NaOF, NaOCl, NaOBr, NaOI, LiOF, LiOCl, LiOBr, LiOI, KOF, KOCl, KOBr, KOI, HO₂F, HO₂Cl, HO₂Br, HO₂I, NaO₂F, NaO₂Cl, NaO₂Br, NaO₂I, LiO₂F, LiO₂Cl, LiO₂Br, LiO₂I, KO₂F, KO₂Cl, KO₂Br, KO₂I, Ca(OF)₂, Ca(OCl)₂, Ca(OBr)₂, Ca(OI)₂, HO₃F, HO₃Cl, HO₃Br, HO₃I, NaO₃F, NaO₃Cl, NaO₃Br, NaO₃I, LiO₃F, LiO₃Cl, LiO₃Br, LiO₃I, KO₃F, KO₃Cl, KO₃Br, KO₃I, HO₄F, HO₄Cl, HO₄Br, HO₄I, NaO₄F, NaO₄Cl, NaO₄Br, NaO₄I, LiO₄F, LiO₄Cl, LiO₄Br, LiO₄I, KO₄F, KO₄Cl, KO₄Br, KO₄I, NaOCl₆, MgO₆F₂, MgO₆Cl₂, MgO₆Br₂, MgO₆I₂, CaO₆F₂, CaO₆Cl₂, CaO₆Br₂, CaO₆I₂, SrO₆F₂, SrO₆Cl₂, SrO₆Br₂, SrO₆I₂, BaO₆F₂, BaO₆Cl₂, BaO₆Br₂, BaO₆I₂, NaOCl₃,NaOCl₄, MgO₈Cl₂, CaO₈Cl₂, SrO₈Cl₂ et BaO₈Cl₂ ; et/ou dans lequel le sel de métal de transition est un ou plusieurs sels de métal de transition choisis dans le groupe constitué par KMnO₄, MnO₂, K₂MnO₄, MnSO₄, CrO₃, Na₂Cr₂O₇, K₂Cr₂O₇, ZnCr₂O₇, H₂CrO₄, chlorochromate de pyridinium, dichromate de pyridinium, V₂O₅, RuCl₃, RuO₂, perruthénate de tétrapropylammonium, MoO₃, K₃[Fe(CN)₆], FeCl₃, nonahydrate de Fe(NO₃)₃, MeReO₃, CuCl, Cu(ClO₄)₂, Cu(HCO₂)₂Ni(HCO₂)₂, Cu(OAc)₂, OsO₄, et (NH₄)₂Ce(NO₃)₆.

5. Appareil pour réparer des matériaux composites comprenant une résine matricielle et une fibre de charge à l'aide d'un processus de solvatation, l'appareil comprenant :
un réservoir de stockage de solution de dépolymérisation (10) ;
un dispositif de mise en contact avec la solution de dépolymérisation (40, 50, 60) destiné à recevoir une solution de dépolymérisation provenant du réservoir de stockage de solution de dépolymérisation (10) et à la fournir de telle sorte que la solution entre en contact avec la partie à réparer d'un plastique renforcé de fibres ; un dispositif de chauffage (20) destiné à chauffer le réservoir de stockage de solution de dépolymérisation ;
une pompe (30) destinée à faire circuler une solution de dépolymérisation depuis le réservoir de stockage de solution de dépolymérisation (10) vers le dispositif de mise en contact avec la solution de dépolymérisation ; et
un dispositif d'alimentation en résine pour fournir une résine matricielle à un squelette fibreux obtenu après la dépolymérisation ; et, en option,
dans lequel l'appareil comprend en outre un dispositif de couture pour renforcer davantage un squelette fibreux obtenu après la dépolymérisation avec des fibres.

6. Appareil pour réparer des matériaux composites comprenant une résine matricielle et une fibre de charge à l'aide d'un processus de solvatation, l'appareil comprenant :
un réservoir de stockage de solution de dépolymérisation (10) ;
un dispositif de mise en contact avec la solution de dépolymérisation (40, 50, 60) destiné à recevoir une solution de dépolymérisation provenant du réservoir de stockage de solution de dépolymérisation (10) et à la fournir de telle sorte que la solution entre en contact avec la partie à réparer d'un plastique renforcé de fibres ;
un dispositif de chauffage (20) destiné à chauffer un tuyau de transfert de solution de dépolymérisation situé entre le réservoir de stockage de solution de dépolymérisation (10) et le dispositif de mise en contact avec la solution de dépolymérisation (40, 50, 60) ;
une pompe (30) destinée à faire circuler une solution de dépolymérisation depuis le réservoir de stockage de solution de dépolymérisation (10) vers le dispositif de mise en contact avec la solution de dépolymérisation (40, 50, 60) ; et
un dispositif d'alimentation en résine pour fournir une résine matricielle à un squelette fibreux obtenu après la dépolymérisation ; et, en option,
dans lequel l'appareil comprend en outre un dispositif de couture pour renforcer davantage un squelette fibreux obtenu après la dépolymérisation avec des fibres.

7. Appareil pour réparer des matériaux composites à l'aide d'un processus de solvatation selon l'une quelconque des revendications 5 et 6, dans lequel le dispositif de mise en contact avec la solution de dépolymérisation comprend en outre un absorbeur sous vide (51).

8. Appareil pour réparer des matériaux composites à l'aide d'un processus de solvatation selon l'une quelconque des revendications 5 à 7, dans lequel le dispositif de mise en contact avec la solution de dépolymérisation comprend en outre une buse de pulvérisation (61) pour pulvériser une solution de dépolymérisation ; et un tuyau de récupération (62) pour récupérer la solution de dépolymérisation après le contact avec la partie à réparer.

9. Appareil pour réparer des matériaux composites à l'aide d'un processus de solvatation selon l'une quelconque des revendications 5 à 8, dans lequel l'appareil comprend en outre un appareil de prétraitement, et l'appareil de prétraitement comprend un dispositif de stockage de solution de prétraitement pour stocker une solution de prétraitement pour la dépolymérisation ; et un dispositif de décharge de prétraitement capable de décharger une solution de prétraitement ; et, en option,
dans lequel la solution de prétraitement est de l'acide acétique, et le dispositif de stockage comprend un récipient étanche pour empêcher la volatilisation de l'acide acétique et un support pour transporter l'acide acétique à l'intérieur du récipient.

10. Appareil pour réparer des matériaux composites à l'aide d'un processus de solvatation selon la revendication 9, dans lequel l'appareil de prétraitement a la forme d'un stylo.
